# EUROPEAN PATENT APPLICATION

(11) **EP 4 776 394 A1**
(43) Date of publication of application: **15.07.2026**
(21) Application number: 25869565.9
(22) Date of filing: 13.01.2025
(51) Int. Cl.: H01M 50/15, H01M 50/566

(54) **COVER PLATE ASSEMBLY, BATTERY CELL, AND BATTERY**

(30) Priority: 12.11.2024 CN 202422764050 U; 12.11.2024 CN 202422764097 U
(71) Applicant: Eve Power Co., Ltd., Jingmen, Hubei 448000 (CN)
(72) Inventor: QIU, Yu, Jingmen, Hubei 448000 (CN); TAN, Xianyang, Jingmen, Hubei 448000 (CN); ZHANG, Jiahao, Jingmen, Hubei 448000 (CN)
(74) Representative: Zhu, Puxing
(86) International application number: PCT/CN2025/072017
(87) International publication number: WO 2026/102900

(57) **Abstract**

The present application provides a cover plate assembly, a battery cell, and a battery. The cover plate assembly includes a cover plate and a pole. The cover plate is provided with a mounting hole, and the cover plate includes a width dimension W and a length dimension L. The pole includes a main body, an end of the main body is provided with a tab connecting groove, and the main body is provided penetrating through the mounting hole. The main body includes a width dimension b' along a direction of the width dimension W, and the main body includes a length dimension a' along a direction of the length dimension L. W - 6 mm ≤ b' ≤ W - 8 mm, and 0.4 ≤ b'/ a' ≤ 0.9.

## Description

This application claims priority to Chinese Patent Application No. 202422764050.9 and Chinese Patent Application No. 202422764097.5, filed on November 12, 2024, the disclosures of which are incorporated herein by reference in their entireties.

### TECHNICAL FIELD

The present application relates to a technical field of batteries, and in particular, to a cover plate assembly, a battery cell, and a battery.

### BACKGROUND

A single battery cell includes a shell, a cover plate assembly covering the shell, and an electrode assembly disposed in the shell. The cover plate assembly includes a cover plate, a pole arranged on the cover plate, an upper plastic member for insulating and isolating an upper end of the pole from a top end of the cover plate, and a lower plastic member for insulating and isolating the cover plate from the electrode assembly and a lower end of the pole. The electrode assembly is connected to the lower end of the pole through a tab. The upper end of the pole is connected to a busbar, so that a plurality of single battery cells can be connected in series or in parallel through the busbar.

In related arts, to ensure the overcurrent capability of single battery cells and improve the ease of welding between the pole and corresponding components, a size of the pole is set relatively large.

### SUMMARY

However, in square-shaped single battery cells, since the cover plate is a rectangular plate, its width is limited, which restricts a width of the pole. As a result, the overcurrent capacity of the pole is poor.

In a first aspect, the present application provides a cover plate assembly. The cover plate assembly includes a cover plate and a pole. The cover plate is provided with a mounting hole, and the cover plate includes a width dimension W and a length dimension L. The pole includes a main body, an end of the main body is provided with a tab connecting groove, and the main body is provided penetrating through the mounting hole. The main body includes a width dimension b' along a direction of the width dimension W, and the main body includes a length dimension a' along a direction of the length dimension L. W - 6 mm ≤ b' ≤ W - 8 mm, and 0.4 ≤ b'/ a' ≤ 0.9.

In a second aspect, the present application provides a battery cell. The battery cell includes a shell, an electrode assembly, a tab assembly, and the aforementioned cover plate assembly. The shell includes an accommodating cavity. The electrode assembly is disposed in the accommodating cavity. The cover plate assembly covers the shell. An end of the tab assembly is connected to the electrode assembly, and another end is located in the tab connecting groove and connected to an inner wall of the tab connecting groove.

In a third aspect, the present application provides a battery. The battery includes a housing assembly and the aforementioned battery cell. The housing assembly includes a mounting cavity. A plurality of battery cells are provided, the plurality of battery cells are arranged in the mounting cavity, and the plurality of battery cells are connected in series and/or in parallel.

### BENEFICIAL EFFECTS

In the present application, by limiting the width dimension b' of the main body with respect to the width dimension W of the cover plate, not only the main body is enabled to have a larger width dimension, but also the strength of the cover plate in a width direction is ensured. At the same time, by limiting the length dimension a' of the main body relative to the width dimension b' of the main body, the length dimension a' of the main body can be prevented from being too small, so that the pole can have a larger length dimension, thereby enhancing the overcurrent capacity of the pole.

### BRIEF DESCRIPTION OF DRAWINGS

FIG. 1 is a schematic structural diagram of a cover plate assembly provided in embodiments of the present application.
FIG. 2 is a structural schematic diagram of a cover plate assembly from another viewing angle provided in embodiments of the present application.
FIG. 3 is a partial top view of a cover plate assembly provided in embodiments of the present application.
FIG. 4 is a partial bottom view of a cover plate assembly provided in embodiments of the present application.
FIG. 5 is a cross-sectional view along A-A in FIG. 3.
FIG. 6 is a schematic diagram showing positions of a tab assembly and a supporting structure provided in embodiments of the present application.
FIG. 7 is a schematic local structural diagram of a cover plate assembly provided in embodiments of the present application.
FIG. 8 is an enlarged view of portion B in FIG. 7.
FIG. 9 is a cross-sectional view at a supporting structure provided in embodiments of the present application.
FIG. 10 is a schematic local structural diagram of a lower plastic member provided in embodiments of the present application.
FIG. 11 is a schematic structural diagram of a battery cell provided in embodiments of the present application.
FIG. 12 is a schematic structural diagram of an overall structure of a battery cell according to the present application.
FIG. 13 is a schematic structural diagram of an overall structure of a battery cell according to the present application.
FIG. 14 is a schematic structural diagram of an overall structure of a battery cell according to the present application.
FIG. 15 is a diagram showing a relationship between a volume of a battery cell and an area of a positive soldering region according to the present application.
FIG. 16 is a diagram showing a relationship between a capacity of a battery cell and an area of a positive soldering region according to the present application.

Explanation of reference numerals:
1, lower plastic member;
11, body; 111, first long side; 12, first surface; 13, first through hole; 14, supporting structure; 141, supporting part; 143, connecting part; 15, connecting structure; 16, second surface; 17, reinforcing platform; 18, groove; 181, liquid-discharge through hole; 19, reinforcing rib;
2, cover plate assembly; 21, cover plate; 22, pole; 221, tab connecting groove; 222, main body; 223, flanging; 224, first end; 23, pressing block; 24, upper plastic member; 25, sealing loop;
3, battery cell; 31, shell; 32, electrode assembly; 33, tab assembly;
1a, positive tab; 11a, positive soldering region; 2a, negative tab; and 21a, negative soldering region.

### EMBODIMENTS OF THE INVENTION

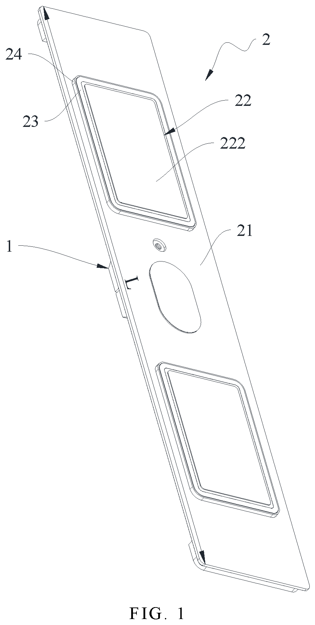

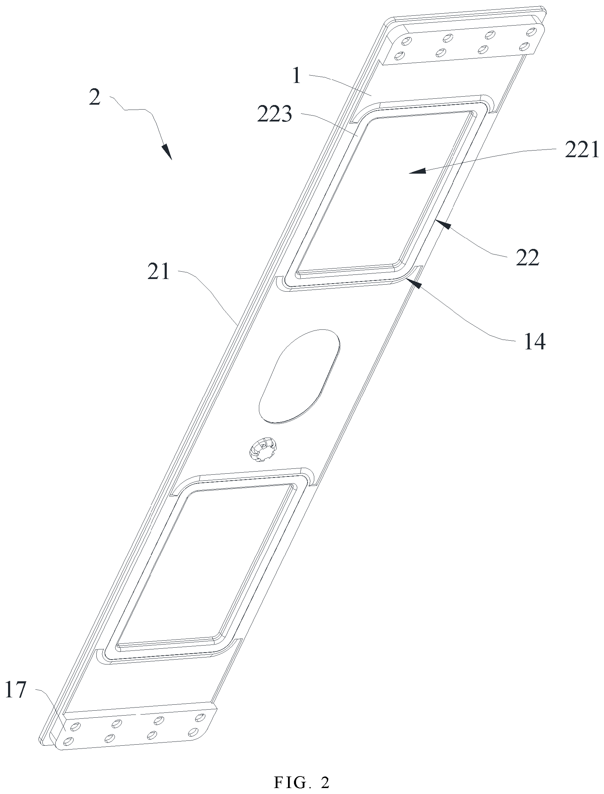

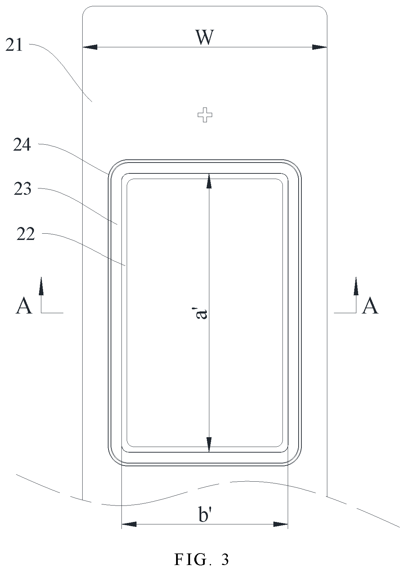

Referring to FIG. 1 to FIG. 3, FIG. 1 is a schematic structural diagram of a cover plate assembly 2 provided in embodiments of the present application, FIG. 2 is a structural schematic diagram of the cover plate assembly 2 from another viewing angle provided in embodiments of the present application, and FIG. 3 is a partial top view provided in embodiments of the present application. Embodiments of the present application provide a cover plate assembly 2. The cover plate assembly 2 includes a cover plate 21 and a pole 22. The cover plate 21 is provided with a mounting hole. The cover plate 21 includes a width dimension W and a length dimension L. The pole 22 includes a main body 222. An end of the main body 222 is provided with a tab connecting groove 221. The main body 222 is provided penetrating through the mounting hole. The main body 222 includes a width dimension b' along a direction of the width dimension W. The main body 222 includes a length dimension a' along a direction of the length dimension L. W - 6 mm ≤ b' ≤ W - 8 mm, and 0.4 ≤ b' / a' ≤ 0.9.

A ratio of the width dimension b' to the length dimension a' includes, but is not limited to, 0.4, 0.44, 0.48, 0.5, 0.52, 0.55, 0.58, 0.6, 0.63, 0.65, 0.68, 0.7, 0.74, 0.76, 0.78, 0.8, 0.82, 0.85, 0.88, or 0.9.

In addition, the width dimension b' of the main body 222 includes, but is not limited to, W - 6 mm, W - 6. 2 mm, W - 6.4 mm, W - 6.5 mm, W - 6.6 mm, W - 6.7 mm, W - 638 mm, W - 7 mm, W - 7.2 mm, W - 7.5 mm, W - 7.6 mm, W - 7.7 mm, W - 7.8 mm, or W - 8 mm.

It can be understood that the cover plate 21 includes a rectangular plate-like structure, which is applied to a square battery cell.

It can be understood that the length dimension a' of the pole 22 is selected with the basic requirement that the installation of the pole 22 does not interfere with other components or affect the assembly. For example, when one pole 22 is provided on the cover plate 21, the length dimension L of the cover plate 21 may be larger, or the length dimension a' of the pole 22 may be larger. When two poles 22 are provided on the cover plate 21, the length dimension L of the cover plate 21 may be larger, or the length dimension a' of the pole 22 may be smaller. Furthermore, when a liquid injection hole and an explosion-proof valve mounting hole are further provided on the cover plate 21, the length dimension L of the cover plate 21 or the length dimension a' of the pole 22 should be adjusted accordingly.

It can be understood that the cover plate assembly 2 may also include a sealing loop 25 and an upper plastic member 24. Therefore, a difference between the width dimension W of the cover plate 21 and the width dimension b' of the main body, on the one hand, ensures the strength of the cover plate 21 after providing the mounting hole to prevent deformation of the cover plate 21 during assembly or use, and on the other hand, reserves an installation space for the upper plastic member 24 and the sealing loop 25.

It can be understood that the pole 22 is a square pole 22, and the corners of the pole 22 are chamfered, and a chamfer radius of the chamfered corner ranges from 0.1 to 2 mm.

In the embodiments, by limiting the width dimension b' of the main body 222 with respect to the width dimension W of the cover plate 21, not only the main body 222 is enabled to have a larger width dimension, but also the strength of the cover plate 21 in a width direction is ensured. At the same time, by limiting the length dimension a' of the main body 222 relative to the width dimension b' of the main body 222, the length dimension a' of the main body 222 can be prevented from being too small, so that the pole 22 can have a larger length dimension, thereby enhancing the overcurrent capacity of the pole 22. On the other hand, the length dimension a' of the main body 222 can be prevented from being too large and affecting the arrangement of other components on the cover plate 21, and the strength of the cover plate 21 in a length direction is ensured.

Furthermore, by limiting the length dimension a' of the main body 222 relative to the width dimension b' of the main body 222, the pole 22 includes an appropriate length dimension, so that a width dimension of a tab connected to the pole 22 can be made relatively large. In this way, not only a current-collecting capability of the battery cell can be improved, but also the ease of welding between the tab and the pole 22 can be improved.

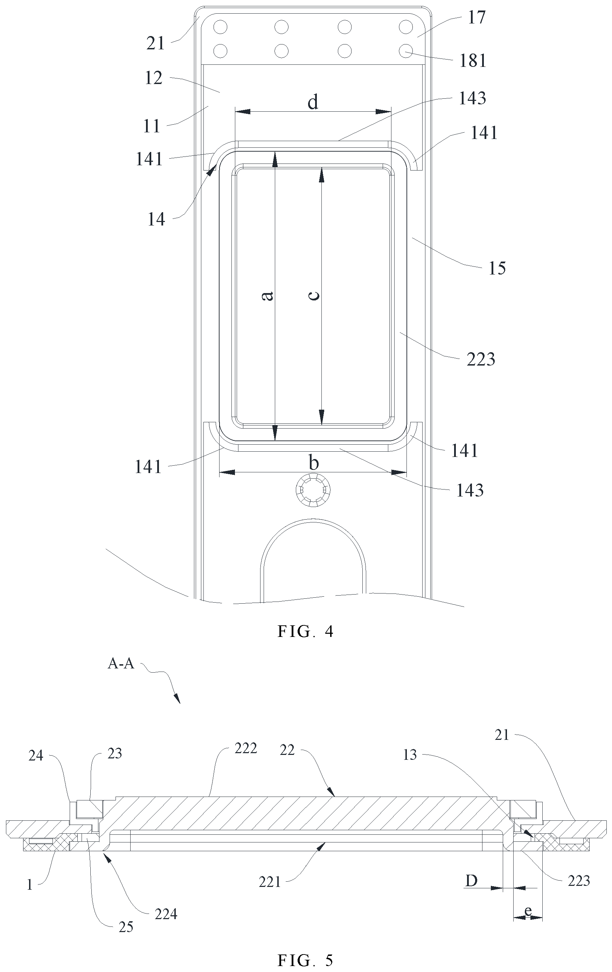

Referring to FIG. 4, FIG. 4 is a partial bottom view of the cover plate assembly 2 provided in embodiments of the present application. In one embodiment, the tab connecting groove 221 includes a width dimension d along the direction of the width dimension W, and the tab connecting groove 221 includes a length dimension c along the direction of the length dimension L, satisfying: 0.4 ≤ d / c ≤ 0.9. In this way, the tab connecting groove 221 includes an appropriate width-length ratio, so as to enhance the stability of matching between the tab connecting groove 221 and the tab, and facilitate welding between the tab and the tab connecting groove 221.

It can be understood that a direction of the length dimension c is parallel to a direction of the width dimension of the tab, while a direction of the width dimension d is the same with a direction of a height dimension of a portion of the tab located in the tab connecting groove 221.

A ratio of the width dimension d to the length dimension c includes, but is not limited to, 0.4, 0.44, 0.48, 0.5, 0.52, 0.55, 0.58, 0.6, 0.63, 0.65, 0.68, 0.7, 0.74, 0.76, 0.78, 0.8, 0.82, 0.85, 0.88, or 0.9.

In one embodiment, d / c = b' / a', so that the structural uniformity of the pole 22 can be enhanced, thereby improving a stressed state of the pole 22.

Referring to FIG. 5, FIG. 5 is a cross-sectional view along A-A in FIG. 3. In one embodiment, a thickness of a groove wall of the tab connecting groove 221 is defined as D, satisfying: 0.8 mm ≤ D ≤ 1.5 mm.

The thickness D of the groove wall of the tab connecting groove 221 includes, but is not limited to, 0.8 mm, 0.85 mm, 0.8 mm, 0.92 mm, 0.86 mm, 1 mm, 1.1 mm, 1.2 mm, 1.25 mm, 1.3 mm, 1.35 mm, 1.4 mm, 1.46 mm, or 1.5 mm.

In the embodiments, by limiting the thickness D of the groove wall of the tab connecting groove 221, on the one hand, the strength of the groove wall of the tab connecting groove 221 can be ensured, preventing the deformation of the pole 22; On the other hand, the tab connecting groove 221 can be made to have a large size, so that not only a size of the tab that is cooperated with the tab connecting groove 221 can be improved, but also the ease of welding the tab to the tab connecting groove 221 can be improved.

Referring to FIG. 5, in some embodiments, the pole 22 further includes a flange 223. The pole 22 includes a first end 224 configured to face an electrode assembly of the battery cell. The flange 223 is arranged on an outer peripheral surface of the main body 222 and is disposed adjacent to the first end 224. The flange 223 is in a stopping fit with the cover plate 21. In this way, when an internal pressure of the battery cell is relatively high, the pole 22 can be effectively prevented from coming out of the cover plate 21 based on the stopping fit between the flange 223 and the cover plate 21.

In addition, when the cover plate assembly 2 further includes a lower plastic member 1, the flange 223 overlaps with the lower plastic member 1, and a portion of the lower plastic member 1 adjacent to the pole 22 is located between the flange 223 and the cover plate 21. In this way, the lower plastic member 1 can be fixed by the flange 223, so as to improve the reliability of fixing the lower plastic member 1.

Referring to FIG. 2 or FIG. 4, in one embodiment, the flange 223 extends in a looped shape along a circumferential direction of the pole 22. In this way, not only can the structural uniformity of the pole 22 be enhanced to improve the stressed state of the pole 22 is improved, but also the stress uniformity of the stopping fitting parts between the pole 22 and the cover plate 21 can be improved, thereby enhancing the stressed state of the cover plate assembly 2.

Referring to FIG. 4, in one embodiment, an outer edge of the flange 223 includes a width dimension b along the direction of the width dimension W, and the outer edge of the flange 223 includes a length dimension a along the direction of the length dimension L, satisfying: 0.4 ≤ a / b ≤ 0.9. In this way, the flange 223 includes an appropriate width-length ratio, so as to enhance the stability of the stopping fit between the flange 223 and the cover plate 21, and control the material usage of the flange 223.

A ratio of the width dimension b to the length dimension a includes, but is not limited to, 0.4, 0.44, 0.48, 0.5, 0.52, 0.55, 0.58, 0.6, 0.63, 0.65, 0.68, 0.7, 0.74, 0.76, 0.78, 0.8, 0.82, 0.85, 0.88, or 0.9.

In one embodiment, a / b = b' / a', so that the structural uniformity of the pole 22 can be enhanced, thereby improving a stressed state of the pole 22.

Referring to FIG. 3 or FIG. 5, in one embodiment, the flange 223 includes a width dimension e along a radial direction of the mounting hole, satisfying 1.5 mm ≤ e ≤ 2 mm.

The width dimension e of the flange 223 includes, but is not limited to, 1.5 mm, 1.6 mm, 1.65 mm, 1.7 mm, 1.76 mm, 1.8 mm, 1.83 mm, 1.9 mm, 1.95 mm, 1.98 mm, or 2 mm.

In the embodiments, by limiting the width dimension e of the flange 223 of 1.5mm, on the one hand, the size of the flange 223 can be prevented from being too large to interfere with the shell or result in insufficient insulation gap; and on the other hand, the flange 223 can be ensured to have a sufficient width dimension, thereby enhancing the reliability of the stopping fit between the flange 223 and the cover plate 21.

Referring to FIG. 2, in one embodiment, the cover plate assembly 2 further includes a lower plastic member 1. The lower plastic member 1 includes a body 11. A side of the body 11 is connected to a side of the cover plate 21. The body 11 is provided with a first through hole 13. The main body 222 is provided further penetrating through the first through hole 13.

It can be understood that the flange 223 overlaps with a side of the lower plastic member 1 facing away from the cover plate 21.

In the embodiments, by providing the lower plastic member 1, the insulation between the cover plate 21 and the electrode assembly of the battery cell can be improved, thereby enhancing the reliability of the battery cell.

Referring to FIG. 2, in one embodiment, the body 11 includes a first surface 12 facing away from the cover plate 21, and a supporting structure 14 is provided protruding outwardly from the first surface 12. The supporting structure 14 is disposed adjacent to the pole 22, and the supporting structure 14 is configured to abut against the tab of the battery cell along an axis of the mounting hole.

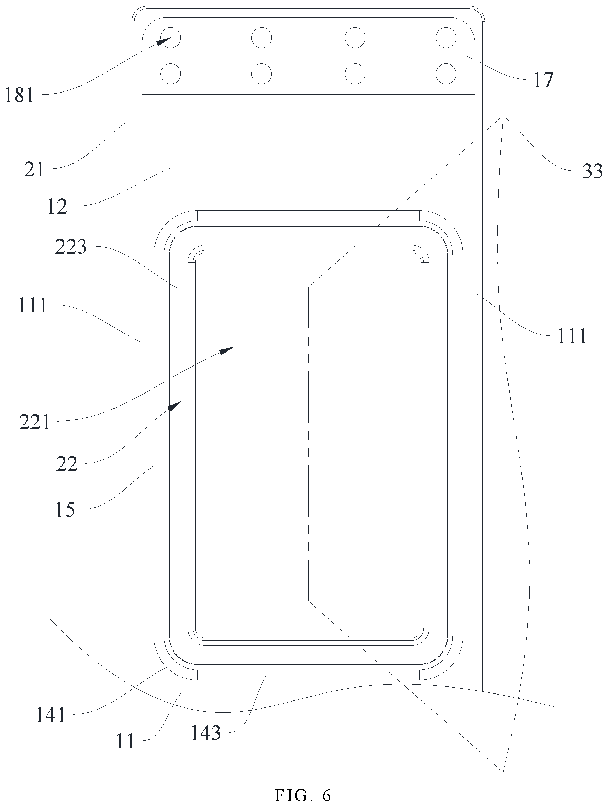

It can be understood that in order to facilitate the insertion of an end portion of the tab assembly into the tab connecting groove 221, the tab is a trapezoidal tab, and a width of the tab gradually increases as approaching an electrode sheet. Therefore, during welding, an end of the tab assembly away from the electrode sheet is smaller in size and is located in the tab connecting groove 221, as shown in FIG. 6, FIG. 6 is a schematic diagram showing positions of the tab assembly and the supporting structure 14 provided in embodiments of the present application. Correspondingly, a portion of the tab assembly located outside the first through hole 13 is supported by the supporting structure 14.

In the embodiments, by providing the supporting structure 14, during the welding of the tab assembly and the pole 22, the tab assembly can be supported by the supporting structure 14 to reduce the deformation of the tab assembly, thereby improving the flatness of contact portions between the tab and the pole 22, and ultimately improving the welding reliability between the tab assembly and the pole 22.

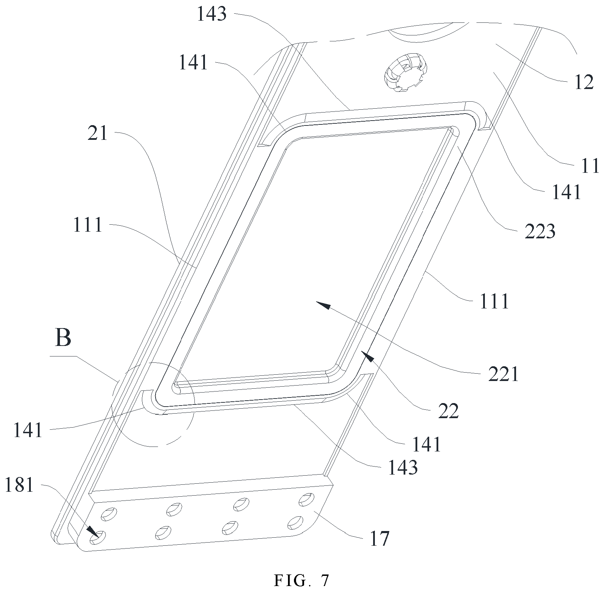

Referring to FIG. 7, FIG. 7 a schematic local structural diagram of the cover plate assembly 2 provided in embodiments of the present application. In one embodiment, the body 11 includes two first long sides 111 parallel to the direction of the length dimension L, and the supporting structure 14 is provided at least on a portion of the body 11 adjacent to one of the first long sides 111. The supporting structure 14 includes two supporting parts 141, and the two supporting parts 141 are arranged symmetrically along the axis of the first through hole 13.

It can be understood that the tab assemblies of part of the square battery cells are bent in the same direction, that is, the tab assemblies are located on a side of the lower plastic member 1 in the width direction. Correspondingly, the supporting structure 14 is provided on the body 11 adjacent to one of the first long sides 111.

It can be understood that two tab assemblies are provided in some square battery cells, and the two tab assemblies are bent in opposite directions. Correspondingly, the supporting structure 14 is provided on all portions of the body 11 adjacent to the two first long sides 111. The two supporting structures 14 respectively support the two tab assemblies.

In the embodiments, by providing the two supporting parts 141 and symmetrically arranging the two supporting parts 141 along a center line of the first through hole 13, the tab assembly can be symmetrically subjected to the supporting force from the supporting structure 14, thereby improving the stressed state of the tab assembly, reducing the deformation of the tab during welding, and further effectively increasing a contact area between the tab assembly and the pole 22.

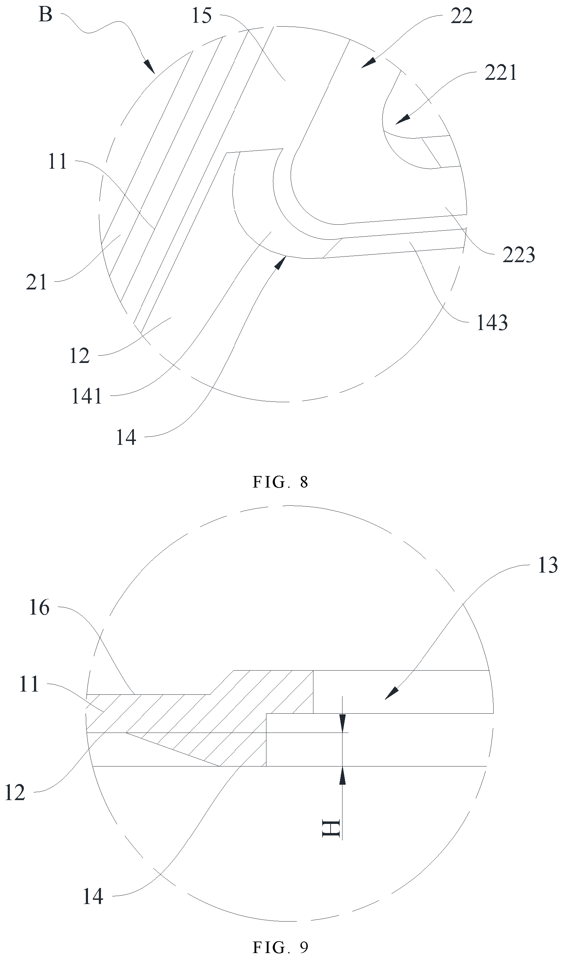

Referring to FIG. 8, FIG. 8 is an enlarged view of portion B in FIG. 7. In one embodiment, along the direction of the length dimension L, an end of one of the two supporting parts 141 and an end of another one of the two supporting parts 141 are respectively located on both sides of the first through hole 13; and along the direction of the width dimension W, another end of each of the two supporting parts 141 is located between an adjacent one of the first long sides 111 and the first through hole 13. In this way, the support of the supporting part 141 for the tab assembly can be enhanced, and the compactness of the layout of various structures on the lower plastic member 1 can be improved, so that the size of the lower plastic member 1 can be controlled, and the manufacturing costs can be effectively controlled.

However, when the first through hole 13 is a rectangular hole and when corners of the first through hole 13 are rounded, a portion of the supporting part 141 opposite to the corner is an arc structure.

Referring to FIG. 7, in one embodiment, the supporting structure 14 is provided on all portions of the body 11 adjacent to the two first long sides 111. The first surface 12 is further provided with two connecting parts 143. The two connecting parts 143 are respectively located on both sides of the first through hole 13 in the direction of the length dimension L. Both ends of the connecting part 143 are connected to the adjacent supporting parts 141, respectively. In this way, the strength of the lower plastic member 1 around the first through hole 13 can be enhanced, so as to improve the deformation of the lower plastic member 1, and the supporting structure 14 can also support an inclined edge of the tab at any angle, thereby enhancing the adaptability of the supporting structure 14.

Referring to FIG. 9, FIG. 9 is a cross-sectional view at the supporting structure 14 provided in embodiments of the present application. In one embodiment, a height dimension of the supporting structure 14 protruding from the first surface 12 is defined as H1, satisfying: 0.2 mm ≤ H1 ≤ 1.2 mm.

Te height dimension H1 of the supporting structure 14 protruding from the first surface 12 includes, but is not limited to, 0.2 mm, 0.3 mm, 0.4 mm, 0.5 mm, 0.62 mm, 0.68 mm, 0.7 mm, 0.72 mm, 0.75 mm, 0.8 mm, 0.85 mm, 0.9 mm, 1 mm, 1.1 mm, or 1.2 mm.

For example, the height dimension H1 of the supporting structure 14 protruding from the first surface 12 is 0.7 mm.

In the embodiments, by limiting the height dimension H1 of the supporting structure 14 protruding from the first surface 12, on the one hand, it is possible to avoid that the height dimension H1 of the supporting structure 14 is too small to result in insufficient support for the tab assembly, and on the other hand, it is possible to prevent the height dimension H1 of the supporting structure 14 from being too large to lead to an excessive height dimension of the battery cell, thereby improving the energy density of the battery cell.

Referring to FIG. 7, in one embodiment, a connecting structure 15 is further provided protruding outwardly from the first surface 12, the connecting structure 15 is located on a side of the through hole, and the connecting structure 15 is configured to be hot-melt connected to an insulating film of the battery cell. In this way, the lower plastic member 1 can be effectively prevented from being melted through during the thermal fusion connection with the insulating film, thereby ensuring the insulation between the cover plate 21 and the internal components of the battery cell.

Optionally, the connecting structure 15 is located between the first through hole 13 and the first long side 111.

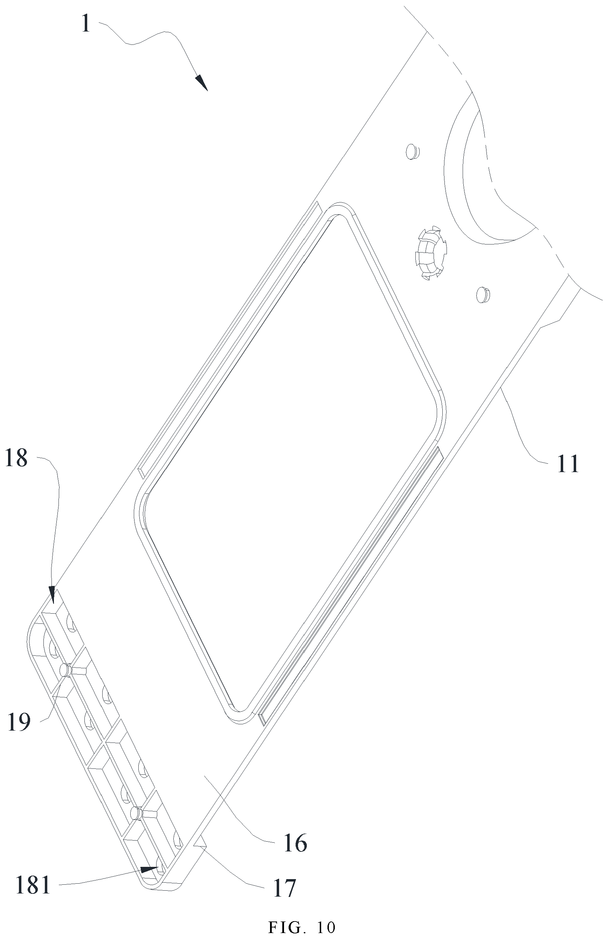

Referring to FIG. 10, FIG. 10 is a schematic local structural diagram of the lower plastic member 1 provided in embodiments of the present application. In some embodiments, a reinforcing platform 17 is provided protruding outwardly from a portion of the first surface 12 adjacent to a periphery of the first surface 12. The body 11 further includes a second surface 16 facing away from the first surface 12. A groove 18 is provided at a portion of the second surface 16 facing the reinforcing platform 17. Reinforcing ribs 19 are provided in a crisscross pattern in the groove 18, and a plurality of liquid-discharge through holes 181 are provided at a groove bottom of the groove 18.

Specifically, the reinforcing platform 17 is provided protruding outwardly at both ends of the first surface 12 along the direction of the length dimension L.

In the embodiments, by providing the reinforcing platform 17, the dimension of the reinforcing rib 19 in a thickness direction of the lower plastic member 1 can be strengthened, so that the strength of the lower plastic member 1 can be increased, and the structural reliability of the cover plate assembly 2 can be improved.

In addition, by providing the liquid-discharge through holes 181, the electrode solution can also flow into the periphery of the electrode assembly through the liquid-discharge through holes during liquid injection, thereby improving the liquid injection efficiency.

It can be understood that in addition to the liquid-discharge through hole 181, the body 11 is provided with a drain hole at a position corresponding to a liquid injection hole of the cover plate 21, and is provided with an air-exhausting hole at a position corresponding to the explosion-proof valve.

Referring to FIG. 2, in one embodiment, there are two poles 22 and two mounting holes, and the two poles 22 are respectively cooperated with the two mounting holes. The lower plastic member 1 includes two bodies 11. The two bodies 11 are provided side by side in the direction of the length dimension L. The first through holes 13 of the two bodies 11 are respectively cooperated with the two poles 22. In this way, the two bodies 11 can be assembled separately during assembly to enhance the adjustability during the process.

In some other embodiments, there are two poles 22 and two mounting holes. The two poles 22 are respectively cooperated with the two mounting holes. The body 11 is provided with two first through holes 13. There are two supporting structures 14. The two supporting structures 14 are respectively arranged in one-to-one correspondence with the two first through holes 13, and the two first through holes 13 are respectively cooperated with the two poles 22.

Referring to FIG. 5, in one embodiment, the cover plate assembly 2 further includes a pressing block 23, an upper plastic member 24, and a sealing loop 25. The pressing block 23 is sleeved on an end of the pole 22 facing away from the tab connecting groove 221, and is located on a side of the cover plate 21. The upper plastic member 24 is sleeved on the pole 22 and is arranged between the pressing block 23 and the cover plate 21. The sealing loop 25 is sleeved on the pole 22 to seal a gap between the pole 22 and the cover plate 21.

It can be understood that the pressing block 23 is welded to the pole 22 to prevent the pole 22 from falling into the inside of the battery cell, and the upper plastic member 24 insulates and isolates the pressing block 23 from the cover plate 21. At the same time, the upper plastic member 24 may also be partially positioned in the mounting hole to improve the insulation between the pole 22 and the cover plate 21. The seal loop 25 prevents the electrolyte from leaking from the mounting hole.

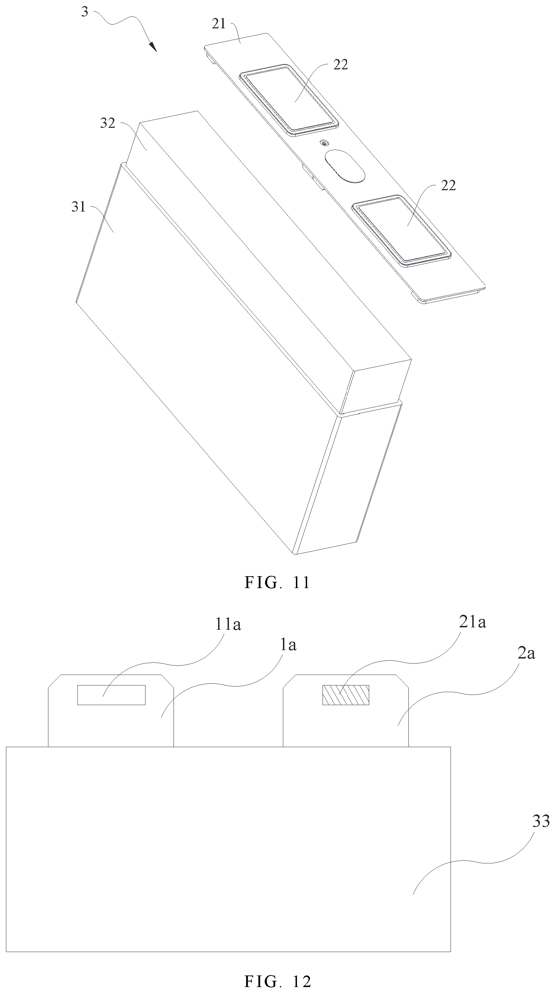

Referring to FIG. 11, FIG. 11 is a schematic structural diagram of the battery cell provided in embodiments of the present application. Correspondingly, embodiments of the present application provide battery cell. The battery cell includes a shell 31, an electrode assembly 32, a tab assembly 33, and the aforementioned cover plate assembly 2. The shell 31 includes an accommodating cavity. The electrode assembly 32 is disposed in the accommodating cavity. The cover plate assembly 2 covers the shell 31. An end of the tab assembly 33 is connected to the electrode assembly 32, and another end of the tab assembly 33 is located in the tab connecting groove 221 and connected to the inner wall of the tab connecting groove 221.

In the embodiments, by adopting the cover plate assembly 2 provided in some embodiments of the present application, on the one hand, the main body 222 is enabled to have a larger width dimension, while the strength of the cover plate 21 in a width direction is ensured; on the other hand, not only can the pole 22 have a larger length dimension to enhance the overcurrent capacity of the pole 22, but also can prevent the length dimension a' of the main body 222 from being too large and affecting the arrangement of other components on the cover plate 21, and can ensure the strength of the cover plate 21 in the length direction.

It is understandable that lithium-ion batteries, with advantages such as light weight and good safety performance, are widely used in fields like electric vehicles. The tab is a key component of the battery cell. A positive tab 1a is generally made of aluminum, and a negative tab 2a is generally made of copper. In the battery cell 3, the tab is connected to the electrode sheet and the pole, serving as the carrier for the battery cell 3 to output current externally. During the use of the battery cell 3, when the overcurrent capabilities of the positive and negative electrodes of the battery cell 3 are inconsistent, it may lead to performance degradation, reduced lifespan, and increased safety risks. Therefore, the connecting structure of the tab is particularly important.

In view of the above situation, the present application further provides the following embodiments to improve the consistency of overcurrent capabilities of the positive and negative electrodes of the battery cell 3.

Referring to FIG. 12, the present application provides the battery cell, the pole 22 includes a positive pole and a negative pole, and the tab assembly 33 includes a positive tab 1a and a negative tab 2a. The positive tab 1a is provided with a positive tab 11a connected to the positive pole. The positive tab 1a is connected to the electrode assembly 32. The negative tab 2a is provided with a negative soldering region 21a. The negative soldering region 21a is connected to the negative pole. The negative tab 2a is connected to the electrode assembly 32. An area of the positive tab 11a is greater than an area of the negative soldering region 21a. As a result, the overcurrent capacity of the positive tab 1a is weaker than the overcurrent capacity of the negative tab 2a. By setting the area of the positive tab 11a to be greater than the area of the negative soldering region 21a, the overcurrent between the positive tab 1a and the negative tab 2a can be balanced, ensuring the stability of the output current of the battery cell 3 and achieving balanced current distribution between the positive and negative electrodes. This structure can not only improve the overall performance of the battery cell, provide more stable power supply guarantee, but also prolong the service life of the battery cell 3.

In some embodiments, the positive tab 1a is a first metal and the negative tab 2a is a second metal, and the conductivity of the first metal is less than the conductivity of the second metal. Specifically, during the charging and discharging process of the battery cell, the flow of current puts forward higher demands on the conductive performance of the positive tab 1a and the negative tab 2a, so that the current output by the battery cell can be better carried. According to the difference in conductivity between the positive tab 1a and the negative tab 2a, in the present application, by setting the area of the positive tab 11a greater than the area of the negative soldering region 21a, the current carrying capacity of the positive tab 1a can be improved, ensuring that during the charge and discharge process of the battery cell 3, the positive electrode can effectively handle its current demands, thereby reducing performance degradation caused by current overload. In the embodiments of the present application, by increasing the area of the positive tab 11a, a conductive area of the positive tab 1a is increased, thereby improving the current carrying capacity of the positive tab 1a and ensuring that the positive electrode of the battery cell 3 can effectively handle its current demands during the charging and discharging process. In addition, this area configuration helps balance the internal current distribution of the battery cell, avoiding uneven internal temperatures in the battery cell 3 or localized temperature increases caused by uneven current carrying between the positive and negative electrodes. This reduces the risk of thermal runaway, improves the reliability of the battery cell 3, and prolongs the service life of the battery cell 3.

Specifically, the positive tab 1a may be made of an aluminum material, and the negative tab 2a may be made of a copper material. Both aluminum and copper have excellent electrical conductivity and chemical stability. Firstly, the manufacturing cost of aluminum is relatively low, which helps reduce the overall production cost of batteries, making it significant for mass production and marketing. Furthermore, the density of aluminum is less than the density of copper, and using aluminum as the positive tab 1a can reduce the weight of the battery. This is particularly important for applications such as portable electronic devices and electric vehicles, as it helps to improve the energy density and endurance of the battery. In terms of performance, although aluminum includes lower electrical conductivity than copper, its good corrosion resistance is crucial to prolonging the service life of the battery. A dense layer of aluminum oxide film can form on the surface of aluminum, and this protective film effectively prevents corrosion, ensuring the stable operation of the battery in harsh environments. On the other hand, the use of copper material for the negative tab 2a is based on the excellent conductivity of copper. The conductivity of copper is higher than the conductivity of aluminum, meaning that in the negative tab 2a, copper can conduct current more efficiently, thereby being crucial for the performance of the battery cell at high current densities. This characteristic of copper enables the negative tab 2a to withstand greater current loads, thereby meeting the performance requirements of the battery cell under high power output demands. Therefore, the positive tab 1a is made of aluminum material and the negative tab 2a is made of copper material, which not only achieves a balance between cost and performance, but also enhances the safety, durability, and environmental friendliness of the battery cell 3.

In some embodiments, the area of the positive tab 11a is defined as a first area. The area of the negative soldering region 21a is defined as a second area. A ratio of the first area to second area is greater than 1.01, and is less than or equal to 1.2. Accordingly, by setting the ratio of the first area to the second area between 1.01 and 1.2 times, the optimization of current distribution can be realized, and the difference in overcurrent capability between the positive tab 1a and the negative tab 2a can be compensated. This is beneficial to maintain the stability of output current of the battery, reduce the performance degradation and thermal management problems caused by uneven current, thereby improving the overall performance and service life of the battery cell 3. In some examples, the ratio of the first area to the second area may be any of 1.04, 1.06, 1.08, 1.1, or 1.2.

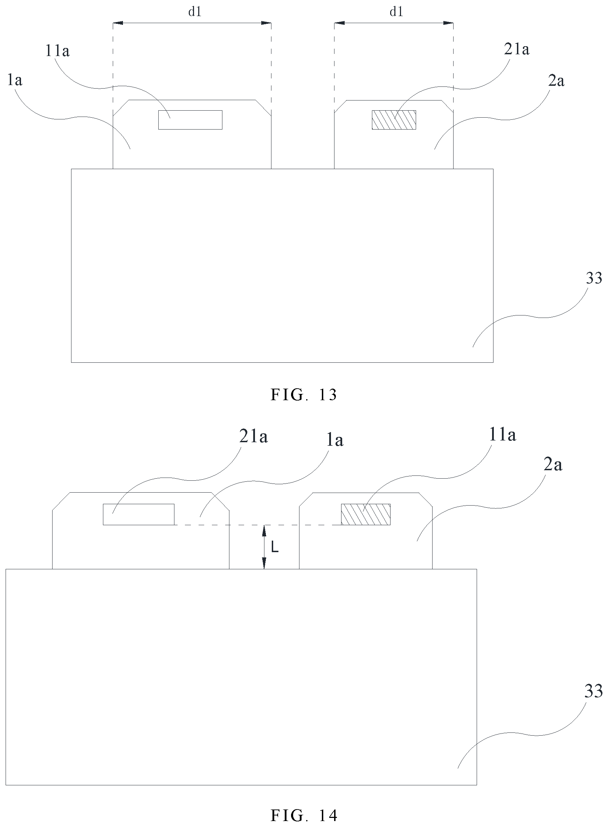

Referring to FIG. 13, in some embodiments, an area of the positive tab 1a is greater than an area of the negative tab 2a. Specifically, the area of the positive tab 1a is designed to be greater than the area of the negative tab 2a, thereby providing a larger area for the positive tab 1a, allowing the positive tab 11a to also be set to a larger area. This enables the positive tab 1a to more effectively carry the current during the charging and discharging process, thereby improving the overall performance and reliability of the battery cell 3.

In some examples, a width of the positive tab 1a may be greater than a width of the negative tab 2a, as shown in FIG. 13, the width of the positive tab 1a may be defined as d1, and the width of the negative tab 2a may be defined as d2, and d1 > d2.

In some embodiments, the area of the positive tab 1a is defined as a third area and the area of the negative tab 2a is defined as a fourth area. A ratio of the third area to the fourth area is greater than 1 and is less than or equal to 1.18. In some examples, the ratio of the third area to the fourth area may be any of 1.0, 1.08, 1.1, 1.15, or 1.18.

In some embodiments, the battery cell 3 cell further includes a positive connecting piece and a negative connecting piece. The positive connecting piece is connected to the positive tab 11a and the positive pole, respectively. The negative connecting piece is connected to the negative soldering region 21a and the negative pole, respectively. Specifically, the connecting piece is a component configured to conduct current. In the embodiments, the positive connecting piece may be welded to the positive tab 11a and the positive pole, respectively, and the negative connecting piece may be welded to the negative soldering region 21a and the negative pole, respectively, so as to ensure the connectivity and stability of the internal circuit of the battery.

In other embodiments, the positive tab 11a is directly welded to the positive pole. The negative soldering region 21a is directly welded to the negative pole. Therefore, in the embodiments, it is not necessary to provide a tab adapter piece inside the battery cell 3. Firstly, the setting step of the tab adapter piece is omitted, and the manufacturing process of the battery cell can be greatly simplified. The traditional manufacturing process of the battery cell 3 involves a plurality of complex steps, which can be simplified to make the production process more straightforward and efficient. This not only reduces production time, but also reduces production costs. Secondly, the design that eliminates the need for the tab adapter piece reduces the use of materials. As an electronic component, the production and installation of the tab adapter piece need to consume certain material resources. By omitting this component, the material waste in the manufacturing process of the battery cell 3 can be significantly reduced, which is of great significance to environmental protection and resource conservation. In addition, the presence of the tab adapter piece may become a potential failure point. This design directly connects the tab and the internal electrodes, reducing connection points, and thereby lowering the risk of failures of the battery cell 3 during operation. The manufacturing process of the battery cell 3 is simpler and more material-saving.

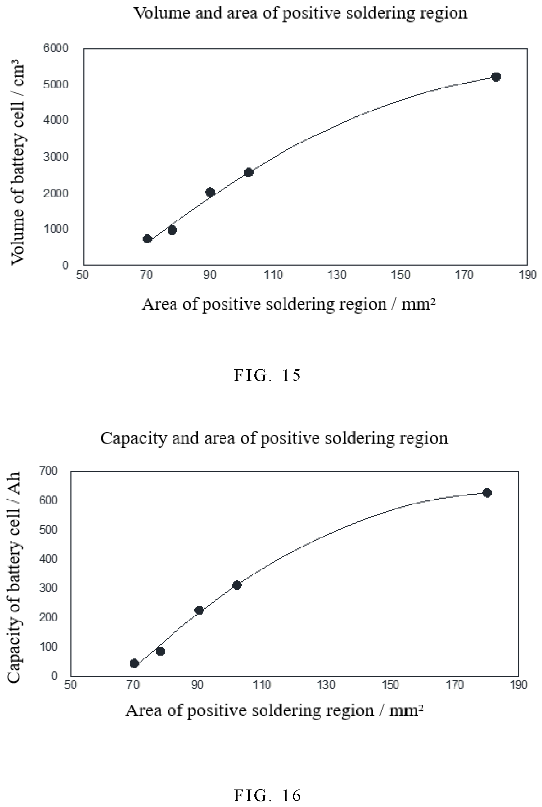

Referring to FIG. 15 and FIG. 16, in some embodiments, the area of the positive tab 11a is positively correlated with the capacity of the battery cell 3 or the volume of the battery cell 3. As a result, as the capacity or volume of the battery cell 3 is larger, the overcurrent of the positive tab 1a is larger. Specifically, as the capacity of the battery cell 3 increases, the volume of the battery cell 3 also increases accordingly. In addition, to make the structure of the battery cell 3 more compact and to avoid redundant space within battery cell 3, the volume of the battery cell 3 increases, which usually leads to an increase in the capacity of the battery cell 3 as well. Accordingly, the area of the positive tab 11a may be positively correlated with the capacity of the battery cell 3, or the area of the positive tab 11a may be positively correlated with the volume of the battery cell 3.

In some embodiments, the area of the positive tab 11a relative to the capacity or volume of the battery cell 3 may be configured as follows: under a condition that 50 Ah ≤ capacity of battery cell 3 < 150 Ah or 700 cm³ ≤ volume of battery cell 3 <2000 cm³, 60 mm² ≤ area of positive tab 11a < 80 mm²; under a condition that 150 Ah ≤ capacity of battery cell 3 < 250 Ah or 2000 cm³ ≤ volume of battery cell 3 < 2400 cm³, 80 mm² ≤ area of positive tab 11a < 100 mm²; under a condition that 250 Ah ≤ capacity of battery cell 3 < 350 Ah or 2400 cm³ ≤ volume of battery cell 3 < 3000 cm³, 100 mm² ≤ area of positive tab 11a < 120 mm²; under a condition that 350Ah ≤ capacity of battery cell 3 < 500 Ah or 3000 cm³ ≤ volume of battery cell 3 < 4000 cm³, 120 mm² ≤ area of positive tab 11a < 80 mm²; under a condition that 500 Ah ≤ capacity of battery cell 3 < 700 Ah or 4000 cm³ ≤ volume of battery cell 3 < 6000 cm³, 150 mm² ≤ area of positive tab 11a < 190 mm².

In some examples, the values of the area of the positive tab 11a, the capacity of the battery cell 3, and the volume of the battery cell 3 can all fluctuate within a range of 4%, so that the impact on the performance of the battery cell 3 is small.

In some embodiments, the ratio of the area of the positive tab 11a to the area of the negative e tab 2a is greater than or equal to 5% and is less than or equal to 11%. Accordingly, the area of the positive tab 11a to the negative tab 2a is controlled in an appropriate proportion, which not only ensures sufficient connection between the pole of the battery cell and the positive tab 11a, ensures effective electrical conduction, but also avoids material waste and structural imbalance caused by excessive area. The control of this ratio is crucial in the manufacturing of the battery cell 3. It not only optimizes the performance of the battery cell 3, improves energy efficiency and cycle life, but also enhances the stability and safety of the battery cell 3 under extreme working conditions, ensuring the overall reliability of the battery cell 3.

In other embodiments, the ratio of the area of the negative soldering region 21a to the area of the negative soldering region 21a is greater than or equal to 5% and is less than or equal to 12%. Accordingly, the area of the negative soldering region 21a to the negative tab 2a is controlled in an appropriate proportion, not only ensures sufficient connection between the pole of the cell and the negative soldering region 21a, ensures effective electrical conduction, but also avoids material waste and structural imbalance caused by excessive area. The control of this ratio is crucial in the manufacturing of the battery cell 3. It not only optimizes the performance of the battery cell 3, improves energy efficiency and cycle life, but also enhances the stability and safety of the battery cell 3 under extreme working conditions, ensuring the overall reliability of the battery cell 3.

Referring to FIG. 14, in some embodiments, the battery cell 3 further includes an electrode assembly 33. The positive tab 1a is connected to the electrode assembly 33, and the negative tab 2a is connected to the electrode assembly 33. The positive tab 11a is provided spaced apart from the electrode assembly 33. Thus, a distance exists between the positive tab 11a and the electrode assembly 33, ensuring safe operation of a welding tool during the welding process. This effectively prevents interference between the positive tab 11a and the electrode assembly 33, thereby reducing the risk of damage to the electrode assembly 33 or the welding tool caused by tool collisions.

Referring to FIG. 14, in some examples, the distance between the positive tab 11a and the electrode assembly 33 may be defined as L, and a range of L may be between 10 mm and 20 mm. In other examples, a range of a distance between the negative soldering region 21a and the electrode assembly 33 may also be between 10 mm and 20 mm.

In some embodiments, the negative soldering region 21a is disposed spaced apart from the electrode assembly 33. Thus, the distance exists between the negative soldering region 21a and the electrode assembly 33, ensuring safe operation of a welding tool during the welding process. This effectively prevents interference between the negative tab 2a and the electrode assembly 33, thereby reducing the risk of damage to the electrode assembly 33 or the welding tool caused by tool collisions. In the related arts, the electrode assembly 33 is also referred to as a core package, a winding core, or a core body, and generally includes a positive electrode sheet, a negative electrode sheet, a positive electrode material, a negative electrode material, and a diaphragm. The electrode assembly 33 can be formed by winding or stacking and is a key structure of the battery cell.

Correspondingly, embodiments of the present application further provide a battery, and the battery includes a housing assembly and the aforementioned battery cell 3. The housing assembly includes a mounting cavity. There are a plurality of battery cells 3, the plurality of battery cells 3 are arranged in the mounting cavity, and the plurality of battery cells 3 are connected in series and/or in parallel.

In the embodiments, by adopting the battery cell 3 provided by some embodiments of the present application, not only can the overcurrent capability be enhanced, but structural strength can also be ensured to improve the reliability of the battery.

In addition, in some embodiments of the present application, the overcurrent capacity of the positive tab 1a is weaker than the overcurrent capacity of the negative tab 2a. By setting the area of the positive tab 11a to be greater than the area of the negative soldering region 21a, the overcurrent between the positive tab 1a and the negative tab 2a can be balanced, ensuring the stability of the output current of the battery cell 3 and achieving balanced current distribution between the positive and negative electrodes. In this way, this structure can not only improve the overall performance of the battery, provide more stable power supply guarantee, but also prolong the service life of the battery.

The technical solutions and the technical effect of the present application will be described in detail below by means of examples. The following embodiments are merely a part of the embodiments of the present application and are not intended to specifically limit the present application. The purpose of the embodiments is to examine the strength of the cover plate 21 and the overcurrent capacity of the pole 22.

The detailed description of the testing content for the embodiments is as follows.

### 1. Test-related instructions

### (1) Relevant parameters of the test object

i. Cover Plate 21
   Material of the cover plate 21 is aluminum alloy;
   Width dimension W of the cover plate 21 is 36 mm;
   Length dimension L of the cover plate 21 is 175 mm; and
   Thickness dimension D of the cover plate 21 is 2 mm.
ii. Pole 22
   Material of the pole 22 is aluminum; and
   Height dimension h of the pole 22 is 3.2 mm.
   Width dimension b' = 30 mm; and
   Length dimension a' = 30/0. 9 ~ 30/0. 4 = 33.3 ~ 75 mm.
   a' is sequentially selected as 33.3 mm, 45 mm, 60 mm, and 75 mm as Test Group One, Test Group Two, Test Group Three, and Test Group Four, respectively.

### (2) Comparison Groups

The parameters of Comparison Group One, Comparison Group Two, and Comparison Group Three are identical to those of the Test Group, except for the length dimension a' of the pole 22 and a length of the mounting hole on the cover plate 21 corresponding to the length dimension a'.

### 2. Test Results

The pressure strength tests are performed on the cover plate 21 and the overcurrent capability tests are performed on the pole 22 for all the Test Groups and the Comparison Groups. The test data are shown in the table below:

**Table 1. Test Comparison Table**

| Name | Width dimension b' / mm | Length dimension a' / mm | Overcurrent capacity of pole 22 (A) | Bearing strength of cover plate 21 (Mpa) |
|---|---|---|---|---|
| Test Group One | | 33.3 | 449.6 | 4.6 |
| Test Group Two | | 45 | 607.5 | 3.9 |
| Test Group Three | | 60 | 810.0 | 3.8 |
| Test Group Four | 30 | 75 | 1012.5 | 3.5 |
| Comparison Group One | | 25 | 337.5 | 4.9 |
| Comparison Group Two | | 30 | 405.0 | 4.7 |
| Comparison Group Three | | 80 | 1080.0 | 3.2 |

As can be seen from Table 1, on the premise that the width dimension b' of the pole 22 is constant, the larger the length dimension a' of the pole 22, the stronger the overcurrent capacity of the pole 22. At the same time, the larger the length dimension a' of the pole 22, the worse the pressure-bearing capacity of the cover plate 21 is. Moreover, the larger the length dimension a' of the pole 22, the more it may affect the arrangement of the explosion-proof valve mounting hole and the liquid injection hole on the cover plate 21, increasing design and manufacturing difficulties. Therefore, the cover plate assembly 2 provided in the embodiments of the present application can not only ensure the overcurrent capacity of the pole 22, but also ensure the strength of the cover plate 21, enabling the cover plate 21 to have appropriate pressure-bearing capability.

## Claims

1. A cover plate assembly (2), comprising:
a cover plate (21) provided with a mounting hole, the cover plate (21) comprising a width dimension W and a length dimension L; and
a pole (22) comprising a main body (222), wherein an end of the main body (222) is provided with a tab connecting groove (221), the main body (222) is provided penetrating through the mounting hole, and the main body (222) comprises a width dimension b' along a direction of the width dimension W, and the main body (222) comprises a length dimension a' along a direction of the length dimension L; and
wherein W - 6 mm ≤ b' ≤ W - 8 mm, and 0.4 ≤ b'/ a' ≤ 0.9.

2. The cover plate assembly (2) according to claim 1, wherein the tab connecting groove (221) comprises a width dimension d along the direction of the width dimension W, and the tab connecting groove (221) comprises a length dimension c along the direction of the length dimension L, satisfying: 0.4 ≤ d / c ≤ 0.9.

3. The cover plate assembly according to claim 2, wherein d / c = b' / a'.

4. The cover plate assembly according to claim 2 or claim 3, wherein a thickness of a groove wall of the tab connecting groove (221) is defined as D, satisfying: 0.8 mm ≤ D ≤ 1.5 mm.

5. The cover plate assembly (2) according to any one of claim 1 to claim 4, wherein the pole (22) further comprises a flange (223), the pole (22) comprises a first end (224) configured to face an electrode assembly (32) of a battery cell, the flange (223) is disposed on an outer peripheral surface of the main body (222) and adjacent to the first end (224), and the flange (223) is in a stopping fit with the cover plate (21).

6. The cover plate assembly (2) according to claim 5, wherein the flange (223) extends in a looped-shape along a circumferential direction of the pole (22).

7. The cover plate assembly (2) according to claim 6, wherein an outer edge of the flange (223) comprises a width dimension b along the direction of the width dimension W, and the outer edge of the flange (223) comprises a length dimension a along the direction of the length dimension L, satisfying: 0.4 ≤ a / b ≤ 0.9.

8. The cover plate assembly according to claim 7, wherein a / b = b' / a'.

9. The cover plate assembly (2) according to any one of claim 5 to claim 8, wherein the flange (223) comprises a width dimension e in a radial direction of the mounting hole, satisfying 1.5 mm ≤ e ≤ 2 mm.

10. The cover plate assembly (2) according to any one of claim 1 to claim 9, further comprising a lower plastic member (1), wherein lower plastic member (1) comprises a body (11), a side of the body (11) is connected to a side of the cover plate (21), the body (11) is provided with a first through hole (13), and the main body (222) is provided further penetrating through the first through hole (13).

11. The cover plate assembly (2) according to claim 10, wherein the body (11) comprises a first surface (12) facing away from the cover plate (21), a supporting structure (14) is provided protruding outwardly from the first surface (12), the supporting structure (14) is disposed adjacent to the pole (22), and the supporting structure (14) is configured to abut against a tab of a battery cell along an axis of the mounting hole.

12. The cover plate assembly (2) according to claim 11, wherein the body (11) comprises two first long sides (111) parallel to the direction of the length dimension L, and the supporting structure (14) is provided at least on a portion of the body (11) adjacent to one of the first long sides (111); the supporting structure (14) comprises two supporting parts (141), and the two supporting parts (141) are arranged symmetrically along an axis of the first through hole (13).

13. The cover plate assembly (2) according to claim 12, wherein along the direction of the length dimension L, an end of one of the two supporting parts (141) and an end of another one of the two supporting parts (141) are respectively located on both sides of the first through hole (13), and along the direction of the width dimension W, another end of each of the two supporting parts (141) is located between an adjacent one of the first long sides (111) and the first through hole (13).

14. The cover plate assembly (2) according to claim 12 or claim 13, wherein the supporting structure (14) is provided on all portions of the body (11) adjacent to the two first long sides (111), and the first surface (12) is further provided with two connecting parts (143), and the two connecting parts (143) are respectively located on both sides of the first through hole (13) along the direction of the length dimension L; and both ends of each of the connecting parts (143) are respectively connected to adjacent ones of the supporting parts (141).

15. The cover plate assembly (2) according to any one of claim 11 to claim 14, wherein a height dimension of the supporting structure (14) protruding from the first surface (12) is defined as H1, satisfying: 0.2 mm ≤ H1 ≤ 1.2 mm.

16. The cover plate assembly (2) according to any one of claim 11 to claim 15, wherein a reinforcing platform (17) is provided protruding outwardly from a portion of the first surface (12) adjacent to a periphery of the first surface (12).

17. The cover plate assembly (2) according to claim 16, wherein the body (11) comprises a second surface (16) facing away from the first surface (12), a groove (18) is provided at a portion of the second surface (16) facing the reinforcing platform (17), and reinforcing ribs (19) are provided in a crisscross pattern in the groove (18), and a plurality of liquid-discharge through holes (181) are provided at a groove bottom of the groove (18).

18. The cover plate assembly (2) according to any one of claim 11 to claim 17, wherein two poles (22) and two mounting holes are provided, and the two poles (22) are respectively cooperated with the two mounting holes;
wherein
the lower plastic member (1) comprises two bodies (11), the two bodies (11) are arranged side by side along the direction of the length dimension L, and first through holes (13) of the two bodies (11) are respectively cooperated with the two poles (22);
or
the body (11) is provided with two first through holes (13), and two supporting structures (14) are provided, the two supporting structures (14) are respectively arranged in one-to-one correspondence with the two first through holes (13), and the two first through holes (13) are respectively cooperated with the two poles (22).

19. 3 The cover plate assembly (2) according to any one of claim 1 to claim 18, further comprising a pressing block (23), an upper plastic member (24), and a sealing loop (25), wherein the pressing block (23) is sleeved on an end of the pole (22) facing away from the tab connecting groove (221) and arranged on a side of the cover plate (21), the upper plastic member (24) is sleeved on the pole (22) and arranged between the pressing block (23) and the cover plate (21), and the sealing loop (25) is sleeved on the pole (22) to seal a gap between the pole (22) and the cover plate (21).

20. A battery cell (3), comprising:
a shell (31) comprising an accommodating cavity;
an electrode assembly (32) disposed in the accommodating cavity;
the cover plate assembly (2) of any one of claim 1 to claim 19, covering the shell (31); and
a tab assembly (33), wherein an end of the tab assembly (33) is connected to the electrode assembly (32), and another end of the tab assembly (33) is located in the tab connecting groove (221) and is connected to an inner wall of the tab connecting groove (221).

21. The battery cell (3) according to claim 20, wherein the pole (22) comprises a positive pole and a negative pole, and the tab assembly (33) comprises:
a positive tab (1a) provided with a positive soldering region (11a), the positive soldering region (11a) being connected to the positive pole, and the positive tab (1a) being connected to the electrode assembly (32); and
a negative tab (2a) provided with a negative soldering region (21a), the negative soldering region (21a) being connected to the negative pole, and the negative tab (2a) being connected to the electrode assembly (32);
wherein the positive tab (1a) is a first metal, the negative tab (2a) is a second metal, a conductivity of the first metal is less than a conductivity of the second metal, and an area of the positive soldering region (11a) is greater than an area of the negative soldering region (21a).

22. The battery cell (3) according to claim 21, wherein the area of the positive soldering region (11a) is defined as a first area, and the area of the negative soldering region (21a) is defined as a second area; and
a ratio of the first area to second area is greater than 1.01, and is less than or equal to 1.2.

23. The battery cell (3) according to claim 21 or claim 22, wherein an area of the positive tab (1a) is greater than an area of the negative tab (2a).

24. The battery cell (3) according to any one of claim 21 to claim 23, wherein the area of the positive tab (1a) is defined as a third area, and the area of the negative tab (2a) is defined as a fourth area; and
a ratio of the third area to the fourth area is greater than 1, and is less than or equal to 1.18.

25. The battery cell (3) according to any one of claim 21 to claim 24, further comprising a positive connecting piece and a negative connecting piece,
wherein the positive connecting piece is connected to the positive soldering region (11a) and the positive pole, and the negative connecting piece is connected to the negative soldering region (21a) and the negative pole.

26. The battery cell (3) according to any one of claim 21 to claim 25, wherein the positive soldering region (11a) is directly welded to the positive pole; and
the negative soldering region (21a) is directly welded to the negative pole.

27. The battery cell (3) according to any one of claim 21 to claim 26, wherein the area of the positive soldering region (11a) is positively correlated with a capacity of the battery cell or a volume of the battery cell.

28. The battery cell (3) according to any one of claim 21 to claim 27, wherein a ratio of the area of the positive soldering region (11a) to an area of the negative tab (2a) is greater than or equal to 5% and is less than or equal to 11%; and/or
a ratio of the area of the negative soldering region (21a) to an area of the negative soldering region (21a) is greater than or equal to 5% and is less than or equal to 12%.

29. The battery cell (3) according to any one of claim 21 to claim 28, wherein the positive soldering region (11a) is arranged at a distance from a cell body (3a), and/or the negative soldering region (21a) is arranged at a distance from the cell body (3a).

30. A battery, comprising:
a housing assembly comprising a mounting cavity; and
the battery cell (3) according to any one of claim 20 to claim 29, wherein a plurality of battery cells (3) are provided, the plurality of battery cells (3) are arranged in the mounting cavity, and the plurality of battery cells (3) are connected in series and/or in parallel.
